# EUROPEAN PATENT SPECIFICATION

(11) **EP 4 142 461 B1**
(45) Date of publication and mention of the grant of the patent: **01.05.2024**
(21) Application number: 21727225.1
(22) Date of filing: 30.04.2021
(51) Int. Cl.: A01B 3/421, A01B 15/14, A01B 3/46, A01B 3/42

(54) **MOUNTED REVERSIBLE PLOUGH**
DREHBARER ANBAUPFLUG
CHARRUE RÉVERSIBLE MONTÉE

(30) Priority: 30.04.2020 IT 202000009571
(43) Date of publication of application: 08.03.2023
(73) Proprietor: Maschio Gaspardo S.p.A., 35011 Campodarsego (PD) (IT)
(72) Inventor: MASCHIO, Andrea, 33075 Morsano Al Tagliamento (PN) (IT); DE LORENZI, Massimo, 30023 Concordia Sagittaria (VE) (IT); MILAN, Federico, 30023 Concordia Sagittaria (VE) (IT)
(74) Representative: Locas, Davide
(86) International application number: PCT/IB2021/053615
(87) International publication number: WO 2021/220235

(56) References cited:
- EP-A1- 0 534 691
- EP-A1- 3 427 559
- WO-A1-2014/067508
- DE-T2- 68 919 954
- FR-A1- 2 517 506
- US-A- 4 207 951

## Description

The present invention relates to a mounted reversible plough of the type including an attachment member with respect to a tractor, a reversal device which is hinged to the attachment member and a reversal actuator which is arranged between the attachment member and the reversal device.

In mounted reversible ploughs, there is normally provided a reversal group with hydraulic actuation which is provided for rotating the frame of the plough through 180° about the reversal axis in order to cause the respective rows of ploughing elements to be alternately operative in the ground to be ploughed in accordance with the position of the reversal block about the reversal axis. There is normally further provision for the working width of the ploughing elements to be adjustable. When this adjustment is varied, there is also varied the inclination of the frame which carries the ploughing groups with respect to the reversal axis of the plough. However, this involves problems because the reversal group is actuated for rotating the frame through 180° about the reversal axis. For example, when the working width is increased, the centre of gravity of the rotating portion of the plough could impede the completion of the rotation, that is to say, portions of the plough could strike the ground in an undesirable manner.

In order to prevent this disadvantage, there is provided a linearization system which acts on the articulated quadrilateral with which the frame of the plough is secured to the reversal device, "straightening" the frame of the plough with respect to the reversal axis via a linearization actuator with hydraulic actuation, the path of which is limited by means of a limiting device.

It is known from WO2014/067508 to limit this path by means of the mechanical catches which cause a pressure peak in the hydraulic system for actuating the linearization actuator so that the reversal actuator is activated when the linearization actuator has caused the desired linearization action. However, the mechanical limiters involve different disadvantages. Furthermore, this linearization system has the problem that the linearization actuator with hydraulic actuation can give rise to undesirable movements in the course of the rotation of the frame of the plough, therefore causing components of the plough to strike the ground in an undesirable manner. The undesirable movement of the linearization actuator during the rotation of the plough is caused, for example, by leaks or by counter-pressures inside the hydraulic circuit of the linearization actuator.

One solution which has been developed in order to seek to overcome these disadvantages is described in EP3427559. In this case, a valve is used for intercepting the flow of pressurized fluid which actuates the linearization actuator.

This valve is mounted on the frame of the plough and actuated by means of a rod, which is in turn connected to the fulcrum, with which the linearization actuator is hinged to the reversal device. In this manner, it is possible for the linearization of the frame to be carried out by detecting the position of the plough frame relative to the reversal device with respect to the axis of the linearization device. Therefore, the actuation of the interception valve takes account of the adjustment of the rod which is responsible for varying the towing of the plough, that is to say, the relative position between the plough and tractor. However, this structure involves the rod which provides for the actuation of the interception valve being dangerously exposed to accidental knocks which can produce deformation thereof and further involves the use of a large number of linkages which are extremely sensitive to possible occurrences of mechanical play which have to be taken up as a result.

Other examples of ploughs are described in US 4207951, FR 2517506, DE 68919954 or EP 0534691.

The technical problem addressed by the present invention is to provide a mounted reversible plough which is structurally and functionally configured to at least partially overcome one or more of the disadvantages set out with reference to the cited prior art.

Another object of the present invention is to provide a mounted reversible plough which is provided with an interception valve which has a simplified actuation mechanism with respect to the cited prior art.

This problem is solved by the invention by means of a mounted reversible plough which is constructed according to one or more of the appended claims. With the present invention, the interception valve keeps the extension of the linearization actuator constant and equal to a desired value over the course of the rotation of the plough. In practice, advantageously, the interception valve of the pressurized fluid flow prevents any leaks or counter-pressures inside the hydraulic circuit of the linearization actuator, therefore preventing the linearization actuator from being able to give rise to undesirable movements in the course of the rotation of the frame of the plough. In this manner, the interception valve acts as a security device, preventing undesirable movements and consequently preventing portions of the plough from striking the ground in an undesirable manner in the course of the rotation.

On the basis of an aspect of the invention, the frame of the plough is secured to a reversal device by means of an articulation arm and a linearization actuator of the frame, the articulation arm is hinged to the frame at a first end thereof about a linearization axis of the frame and hinged to the reversal device at a second opposite end thereof about an articulation axis and the interception valve is configured so as to intercept the flow of the pressurized fluid so as to keep the linearization of the frame constant in a manner actuated by the linearization actuator when the frame is caused to rotate about the reversal axis.

It is further possible to place the interception valve on the reversal actuator and preferably to control it by means of a rod which is mounted on the reversal device. In another embodiment, the interception valve is fixed to the headstock of the plough at the side directed towards the tractor and is controlled by an abutment portion which is mounted on the rotation pin of the reversal device and is preferably rotationally secure relative thereto. This system solves the problem of occurrences of assembly play and provides a control structure of the valve which is very simple and effective.

According to another advantageous aspect, the invention allows the extension of the linearization actuator of the plough to be kept constant and equal to a desired value when the frame has to be rotated through 180° as a result of the effect of the reversal device adjusting the supply of the pressurized fluid to the linearization actuator.

It is preferably possible to adjust the reversal angle of the frame at which the valve intercepts the flow of pressurized fluid to the linearization actuator. It may be noted that, in this context, the term "reversal angle" preferably refers to the rotation angle of the frame about the reversal axis of the plough. According to additional aspects, the linearization actuator together with an articulation arm forms an articulated quadrilateral, the remaining two sides of which are preferably formed by the reversal device between the articulation axis and an axis for rotatably securing a first end of the linearization actuator at the side directed towards the reversal device and by the frame between the linearization axis and an axis for rotatably securing a second opposite end of the linearization actuator.

The reversal actuator preferably has a first end which is secured to the attachment member of the plough with respect to the tractor and a second end which is secured to the reversal device of the plough.

There is preferably provided an adjustment actuator for varying the working width between the consecutive plough elements.

The features and advantages of the invention will be better appreciated from the detailed description of a preferred embodiment thereof which is illustrated, by way of non-limiting example, with reference to the appended drawings, in which:
- Figure 1 is a general side view of the reversible plough in a non-operative configuration;
- Figure 2 is a view of a detail relating to a reversal device and a reversal actuator of the plough of Figure 1;
- Figures 3, 5, 7 and 9 are front views of the detail of the plough of Figure 2, in which the plough takes up different angular positions with respect to its reversal axis;
- Figures 4, 6, 8 and 10 are views according to a lateral perspective of a detail relating to Figures 3, 5, 7 and 9, respectively;
- Figures 11 and 12 are perspective views of a detail of the plough according to a second embodiment of the invention.

In the Figures, there is generally designated 1 a mounted plough of the reversible type. The plough 1 is provided with an attachment member 2 with respect to the tractor for example of the type with three points with a headstock 8 which carries a main pin 3, the axis X of which defines the reversal axis of the plough.

In an aspect, the main pin 3 can freely rotate with respect to the member 2 about the reversal axis X. There is mounted on the main pin 3 a reversal device 4 which is configured to rotate about the reversal axis when a reversal actuator 6 is actuated, for example with a hydraulic jack. Preferably, the main pin 3 and the reversal device 4 are rotationally fixed about the reversal axis X and there is provided, in some embodiments, a bush 5 which is preferably interposed between the main pin 3 and the member 2 so as to make the rotation of the main pin 3 easier with respect to the member 2 about the reversal axis X. It may be noted that, in an aspect, the main pin 3 forms an integral part of the reversal device 4.

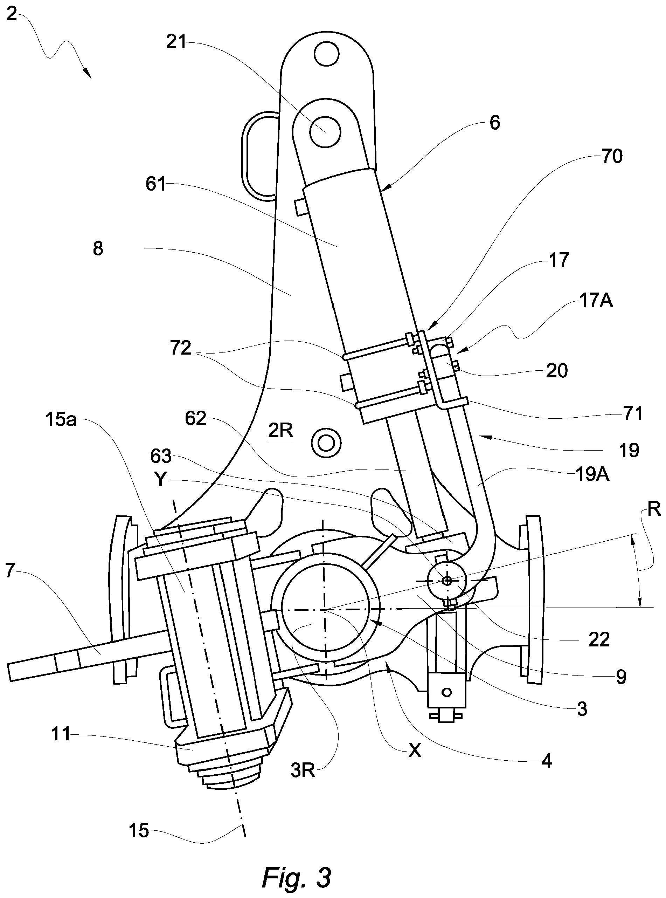

As better illustrated in the embodiment of Figure 3, in some embodiments the reversal device 4 comprises a reversal arm 7 and an actuation arm 9 which are opposite and which, in some embodiments, extend in a substantially radial direction from the main pin 3, preferably in a substantially perpendicular direction relative to the reversal axis X. One end of the reversal actuator 6 is hinged to the actuation arm 9, the opposite end of the reversal actuator 6 being preferably secured in a pivotable manner to a pin 21 which is fixedly joined to the headstock 8.

Preferably, the reversal actuator 6 is hinged to the actuation arm 9 in a pivotable manner about the axis Y of a pin 22.

Preferably, the reversal actuator 6 comprises a cylinder 61 which is pivotably secured to the pin 21 and a piston 62 which is pivotably secured to the pin 22. In another embodiment, the cylinder 61 is pivotably secured to the pin 22 and the piston 62 is pivotably secured to the pin 21.

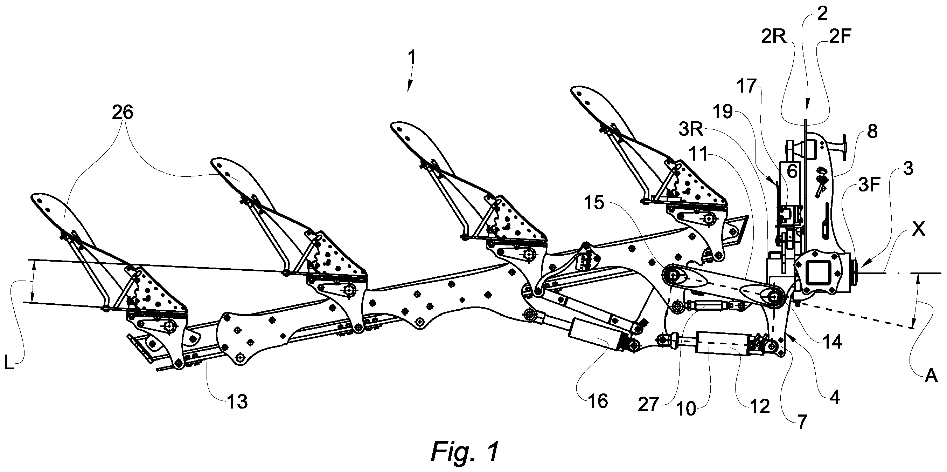

Advantageously, the reversal arm 7 can constitute a side of an articulated quadrilateral which is generally designated 10 and which is illustrated in Figure 1, the remaining three sides of which are constituted by an articulation arm 11, a linearization actuator 12 and a portion of a frame which is generally designated 13 of the plough, respectively. In some embodiments, the frame portion which forms the side of the quadrilateral 10 is between the linearization axis 15 and an axis for rotatably securing a second opposite end of the linearization actuator 12 to the reversal arm 7.

Preferably, the articulation arm 11 and the linearization actuator 12 are hinged to the reversal arm 7 near the main pin 3 and in a distal position relative thereto, respectively. The hinging axis of the articulation arm 11 is indicated as an articulation axis 14 and can comprise a pin 14a which defines the axis itself.

In some embodiments, the opposite end of the articulation arm 11 can be hinged to the frame 13 by means of an additional pin 15a, the axis 15 of which is consequently indicated as the linearization axis of the frame 13. It is evident that, preferably, the linearization axis 15 is different from the reversal axis X. Even more preferably, the linearization axis 15 is perpendicular or in any case transverse with respect to the reversal axis X. There may be provided between the articulation arm 11 and the frame 13 a rod 27, preferably of the type with a mechanical turnbuckle (or similar device which may be hydraulic) which is provided to adjust the towing of the plough.

Still with reference to Figure 1, in a highly preferred example, there are mounted on the frame 13 two or more rows of opposite ploughing elements 26, the working width L of which in some embodiments is adjusted by means of an adjustment actuator 16 which serves to vary, preferably continuously, the working width L between consecutive ploughing elements 26 between a minimum position and a maximum position. The actuator 16 is preferably of the type with a hydraulic jack but there is provision for it to be able to be actuated differently, for example, electro-mechanically.

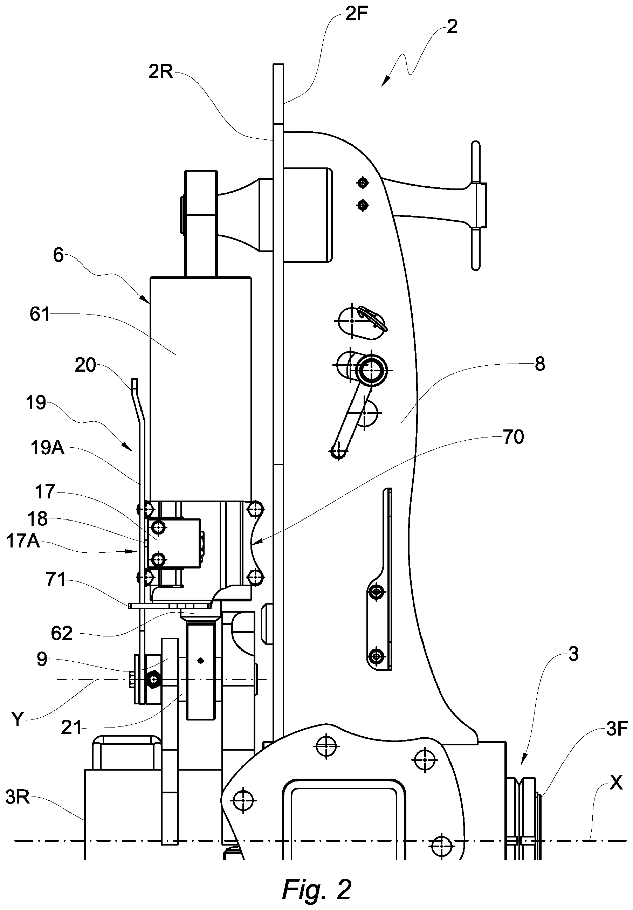

In preferred embodiments, the linearization actuator 12 is actuated by a pressurized fluid, the flow of which can be intercepted by means of a valve 17, which can better be seen in Figure 2, in order to keep constant the linearization of the frame actuated by the linearization actuator when the frame is rotated about the reversal axis X. This valve 17 is advantageously actuated in accordance with the relative angular position of the frame 13 with respect to the individual reversal axis X, that is to say, it is advantageously actuated in accordance with the angular position of the frame 13 about the reversal axis X, the angular position of which preferably defines a relative rotation angle R. To this end, in a preferred embodiment, the plough of the present invention comprises a commutation device 17A which is configured so as to actuate the valve 17, preferably selectively intercepting or allowing the flow of fluid, as a function of the above-mentioned angular position, that is to say, as a function of the rotation angle R of the frame 13 about the reversal axis X.

It may be noted that, in some embodiments, the commutation device 17A is configured to actuate the valve 17 exclusively as a function of the rotation angle R of the frame 13 about the reversal axis X. In other words, in some embodiments, the valve 17 cannot be actuated by the commutation device 17A as a function of a variable independent of the rotation angle R, such as, for example, as a function of the position of the frame 13 relative to the reversal device 4 about the linearization axis 15.

It will be appreciated that, in some embodiments, the interception valve 17 may be activated mechanically, hydraulically, pneumatically, electrically, electronically or by means of gravitational force.

In some embodiments, the commutation device 17A is of the mechanical type and, for example, may comprise a switch 18 which is mounted on the valve, preferably cooperating with an abutment portion 19 of the reversal device so that the valve is closed or opened in accordance with the position of the actuation with the switch 18 with respect to the abutment portion 19. To this end, the abutment portion 19 can be configured so as to abut the switch 18, actuating the commutation device 17A, as a function of the rotation angle R. It is therefore evident that the switch 18 advantageously acts as a probe or transfer member with respect to the abutment device 19.

It must be observed that, in an embodiment, the interception valve 17 is of the type which is "normally open", that is to say, when the switch 18 is not actuated the valve 17 allows the flow of pressurized fluid to the linearization actuator 12. Preferably, therefore, the abutment portion 19 is configured to abut the switch 18 during the reversal of the frame 13 so as to block the flow of oil to the linearization actuator 12.

In another embodiment, the interception valve 17 is of the type which is "normally closed", that is to say, when the switch 18 is not actuated the valve 17 intercepts the flow of pressurized fluid to the linearization actuator 12. In this case, preferably, the abutment portion 19 is configured to abut the switch 18 in the working condition in order to allow the flow of oil to the linearization actuator 12 while it is configured not to abut the switch 18 during the reversal of the frame 13 so as to block the flow of oil to the linearization actuator 12. According to another aspect of the invention, the valve 17 with the relevant switch 18 is fixed to the cylinder 61 by means of a support 70, the position of which along the cylinder 61 is adjustable, preferably by acting on a pair of clamping rings 72. In this manner, the user can adjust the position of the valve 17 in accordance with the working conditions or in accordance with the need to take up any occurrences of mechanical assembly play in the linearization and reversal linkages of the plough.

It is preferable for the abutment portion 19 to be eccentric with respect to the reversal axis X. In some embodiments, the abutment portion 19 is securely fixed to the main pin 3 of the reversal device. In other embodiments, however, the abutment portion 19 is kinematically connected to the main pin 3, preferably in an eccentric position with respect to the reversal axis X.

In some embodiments, the abutment portion 19 is formed by a rod 19A.

An end of the rod 19A is preferably pivotably secured about the axis Y of the pin 22, as illustrated, for example, in Figure 3.

Advantageously, the end of the rod 19A is pivotably secured to the reversal device 4 about the same axis Y as the one about which an end of the reversal actuator 6 is pivotably secured.

It must be observed that, in one aspect, the axis Y is parallel with the reversal axis X and spaced apart therefrom. Advantageously, therefore, the rod 19A is hinged to the reversal device 4 in an eccentric position with respect to the reversal axis X.

During the reversal of the frame 13, the rod 19A is advantageously maintained in a parallel state relative to the reversal actuator 6 by a guide 71 which is fixedly joined to the support 70. Furthermore, the guide 71 limits the flexion of the rod 19A as a result of the force applied by the switch 18 in contact with the rod itself.

In preferred embodiments, an abutment end of the rod 19A opposite the reversal device 4 comprises at least one portion 20 which is inclined or curvilinear and which is configured to progressively press or disengage the switch 18 when the valve 17 moves towards the rod 19A or moves away therefrom, respectively.

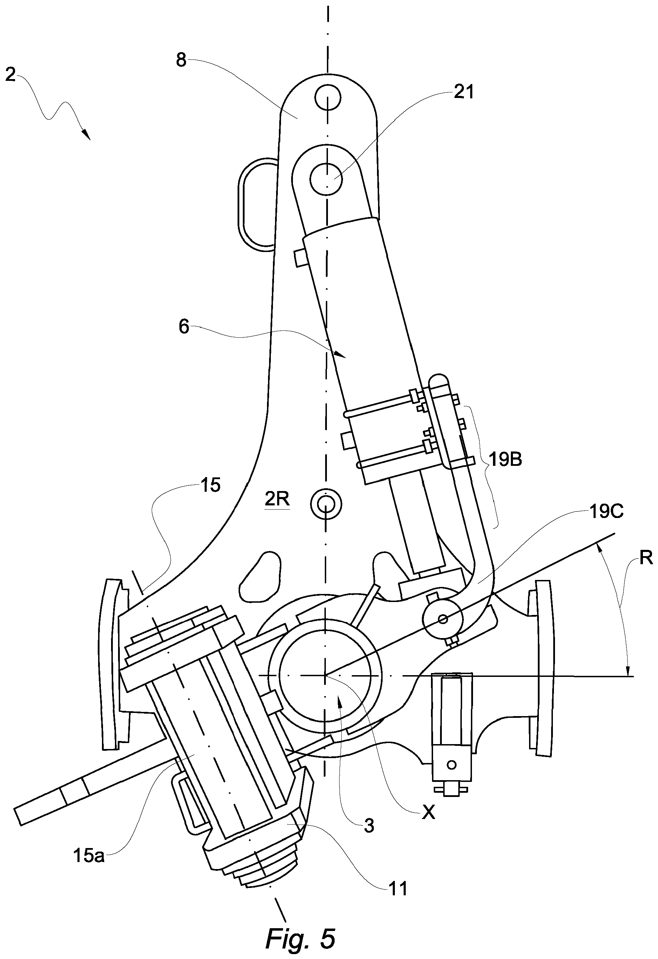

In preferred embodiments, the rod 19A provides for a rectilinear portion 19B which develops parallel with the sliding direction of the reversal actuator 6, as illustrated, for example, in Figure 5. Preferably, the rectilinear portion 19B of the rod 19A is provided in an intermediate position between the abutment end of the rod and the end of the rod pivotably secured about the axis Y. Advantageously, the rod 19A provides for a curvilinear portion 19C which is capable of uniting the rectilinear portion of the rod and the end of the rod which is pivotably secured about the axis Y.

Preferably, the rectilinear portion 19B of the rod 19A provides a surface 19D which is substantially flat and which is intended to maintain the switch 18 in a pressed state in the course of the rotation of the frame 13 about the reversal axis X.

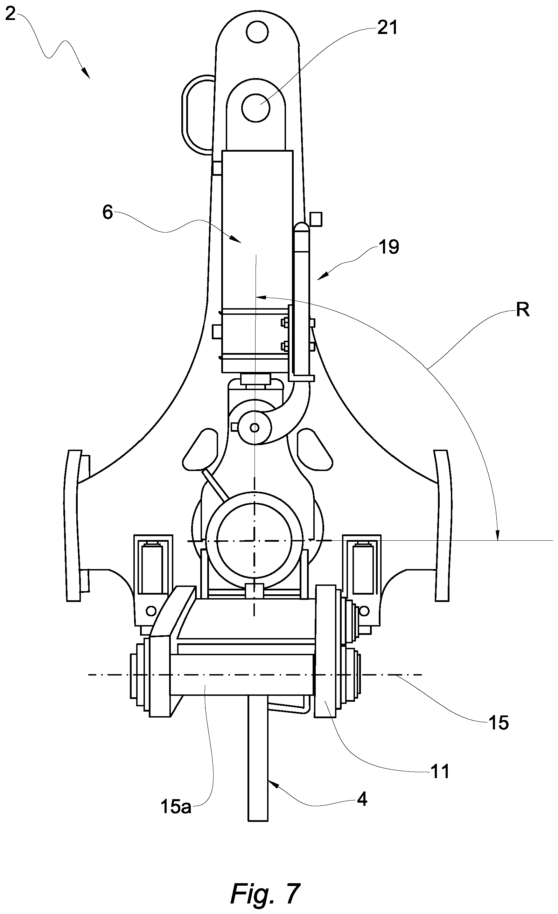

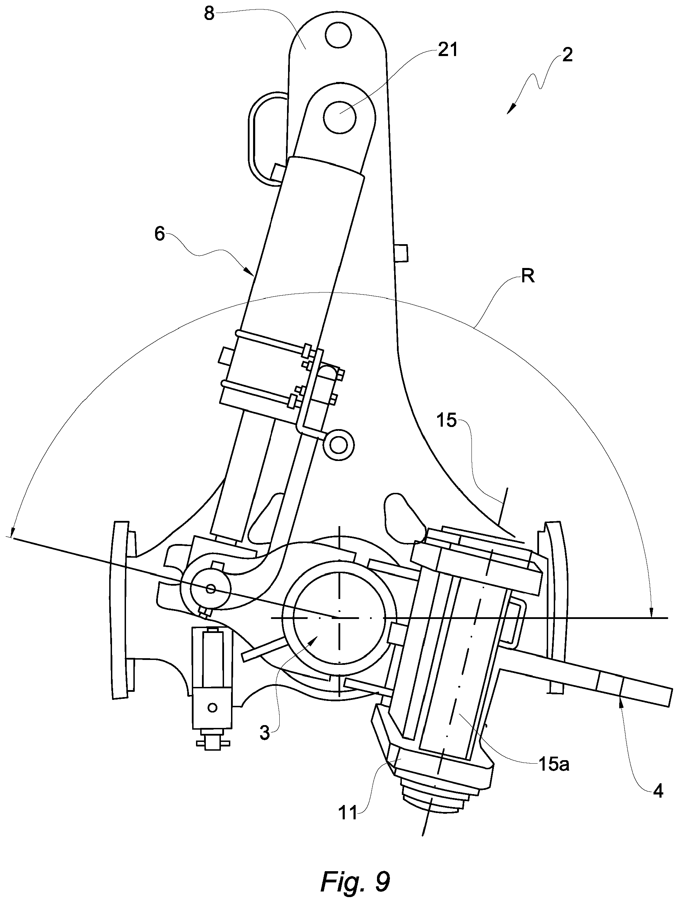

With particular reference to the embodiment illustrated in Figures 3, 5, 7 and 9, the relative angular position of the frame 13 about the reversal axis X is defined by the rotation angle R which varies from 0° up to a reversal angle Z (not illustrated in the Figures) in order to cause the respective rows of ploughing elements 26 to be alternately operative in the ground to be ploughed.

Preferably, the reversal angle Z is between 160° and 200°. Even more preferably, the reversal angle Z is between 170° and 190°. In a preferred embodiment, the reversal angle Z is 180°.

On the basis of an aspect of the invention, the position of the interception valve 17 with respect to the rod 19A is selected so that the linearization of the frame 13 is maintained in a constant state by the valve 17 for a predetermined range of values (where applicable, adjustable) of the rotation angle R. In practice, the position at which the support 70 is fixed along the cylinder 61 allows adjustment of the intercept angle I (not illustrated in the Figures), that is to say, the rotation angle R at which the valve 17 intercepts the flow of pressurized fluid.

With this system it is obtained that, upon varying the rotation angle R through the reversal actuator 6 during the rotation step of the plough, the position of the articulation arm 11 advantageously remains the same. This is carried out because, preferably, the angle A formed between the articulation arm 11 and the reversal axis X remains unchanged because the valve 17 intercepts the flow of pressurized oil supplied to the linearization actuator 12, preventing any leaks or counter-pressures in the oil circuit from being able to vary the extension of the linearization actuator 12 in an undesirable manner.

In another possible configuration which is not illustrated, the valve 17 and the rod 19A can be mounted on the reversal actuator 6 and on the reversal device 4, respectively.

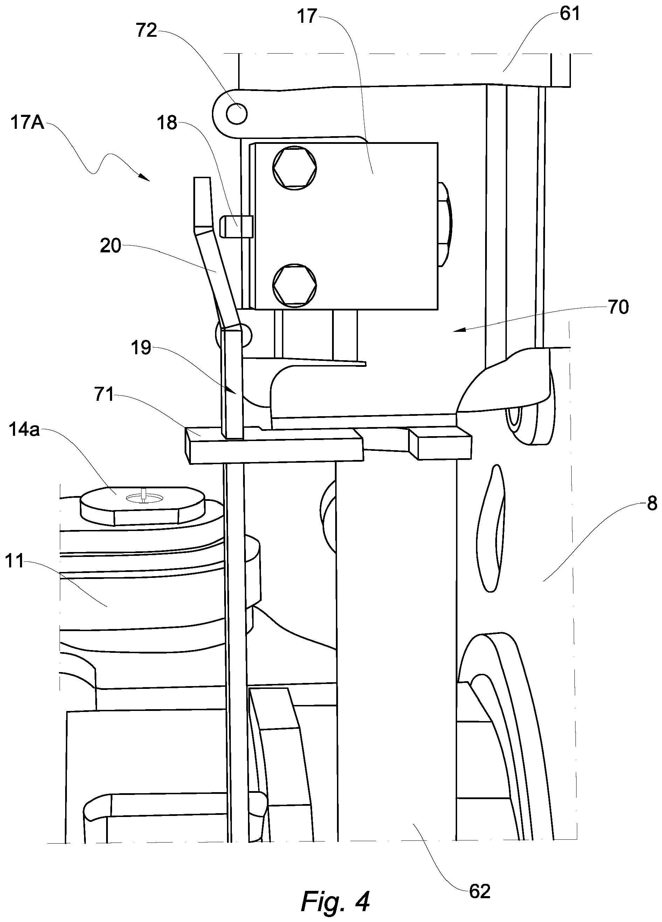

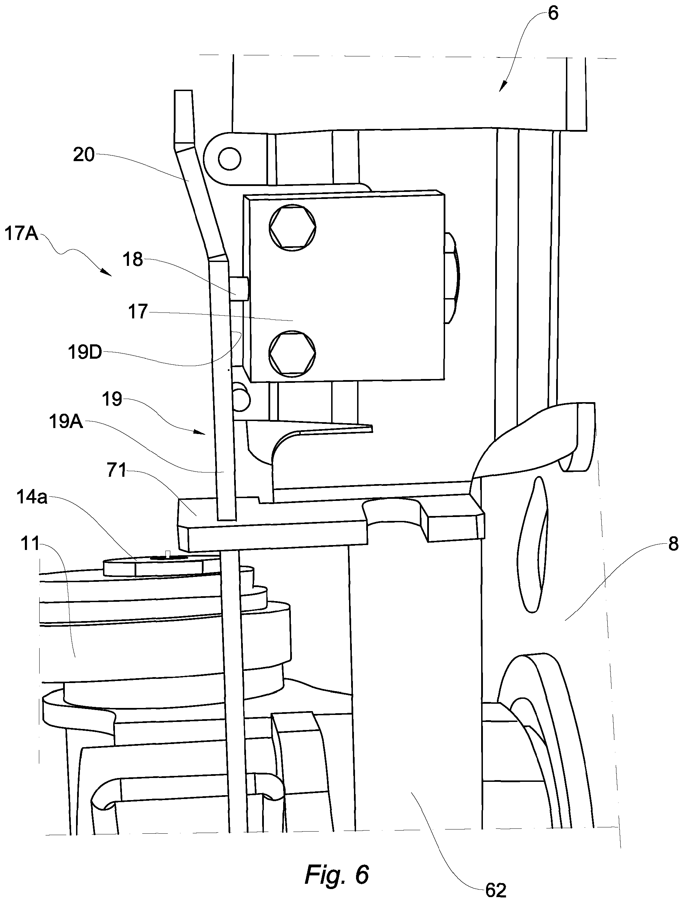

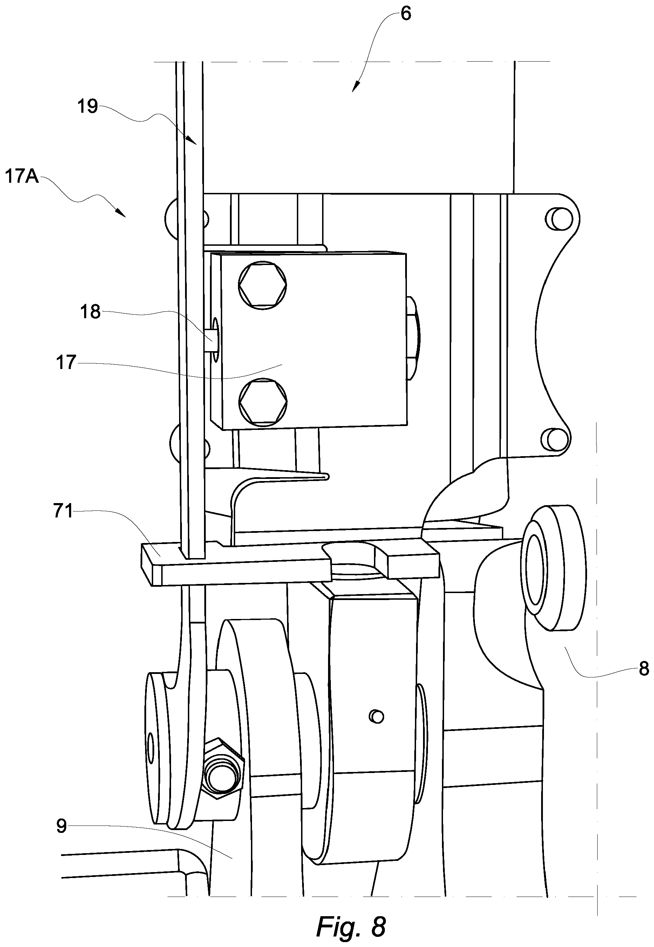

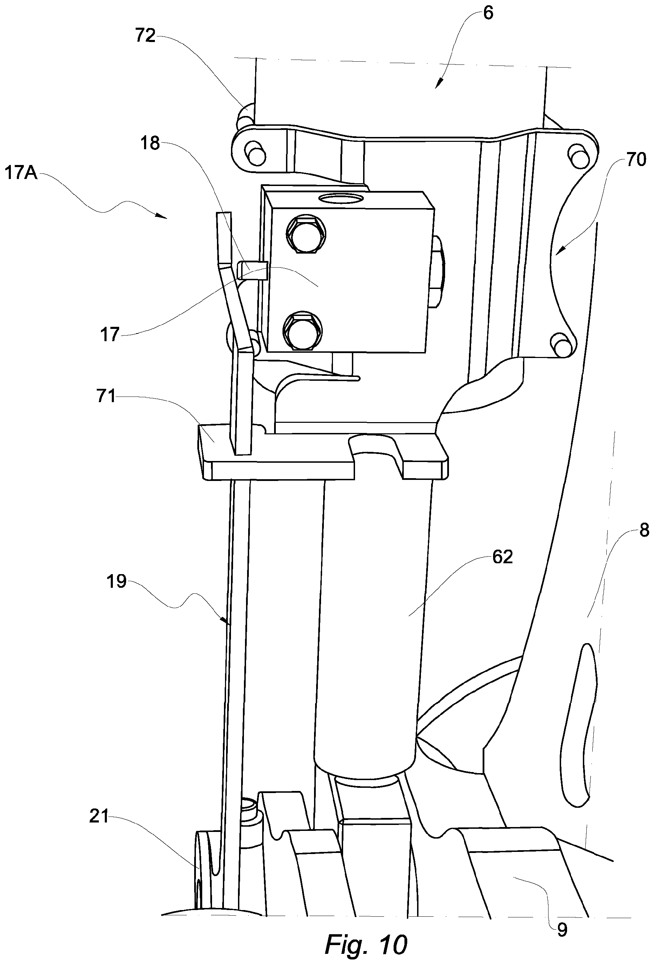

Figures 3, 5, 7 and 9 illustrate by way of example successive steps of reversal of the plough, in which the rotation angle R varies progressively from a value substantially equal to or slightly less than the intercept angle I as far as a value substantially equal to or slightly greater than (Z-I). Figures 4, 6, 8 and 10 illustrate, still by way of example, the position of the switch 18 with respect to the rod 19A in the steps of reversal of the plough illustrated in Figures 3, 5, 7 and 9, respectively.

On the basis of another aspect of the invention, the step of reversal of the plough 1, with which one or the other of the two rows of ploughing elements 26 are moved into an operating ploughing position is preceded by a linearization step, in which the linearization actuator 12 presses on the frame 13, causing the articulation arm 11 to rotate about the articulation axis 14. Once the linearization actuator 12 has reached the maximum extension or the extension otherwise desired, the step of reversal is carried out, wherein the reversal actuator 6 presses on the actuation arm 9. The reversal actuator 6 preferably being secured in a pivotable manner to the pin 21 which is fixedly joined to the headstock 8, the actuation of the reversal actuator 6 brings about the rotation of the frame 13 of the plough about the reversal axis X. As a result of the rotation of the reversal device 4, the switch 18 is caused to move in translation on the rod 19A. When the rotation angle R of the frame 13 about the axis X reaches the value of the intercept angle I, the switch 18 advantageously causes the valve 17 to close completely with the effect of interrupting the flow of pressurized oil to the linearization actuator 12. At this point, preferably, the reversal actuator 6 continues to press on the actuation arm 9, causing the rotation of the plough to continue until reaching the reversal angle Z. During the reversal of the plough from a rotation angle R corresponding to the intercept angle 1 up to a rotation angle R' corresponding to the angle (Z-I), the valve 17 advantageously remains always closed and the linearization actuator 12 maintains the initial linearization which was reached before the closure of the valve 17. Preferably, the valve 17 re-opens the flow of pressurized oil to the linearization actuator 12 from a rotation angle R' of (Z-I), allowing the linearization actuator 12 to bring the frame 13 back into the desired operating position. The reversal of the plough is complete when a rotation through an angle equal to the reversal angle Z about the axis X is reached in order to cause the respective rows of ploughing elements 26 to be alternately operative in the ground to be ploughed.

Preferably, the intercept angle I is between 2° and 30°. More preferably, the angle I is between 5° and 15°. Even more preferably, the angle I is 10°.

With reference to the embodiment illustrated in Figure 1, it will be appreciated that it is possible to define on the attachment member 2 and on the main pin 3 respective front portions 2F and 3F which are directed in the opposite direction to the frame 13. In one aspect, it is possible to define a rear portion 2R of the attachment member 2 at the side directed towards the frame 13 and a front portion 2F of the attachment member 2 opposite the rear portion 2R and preferably directed towards the tractor. Similarly, it is possible to define a rear portion 3R of the main pin 3 at the side directed towards the frame 13 and a front portion 3F of the main pin 3 opposite the rear portion 3R.

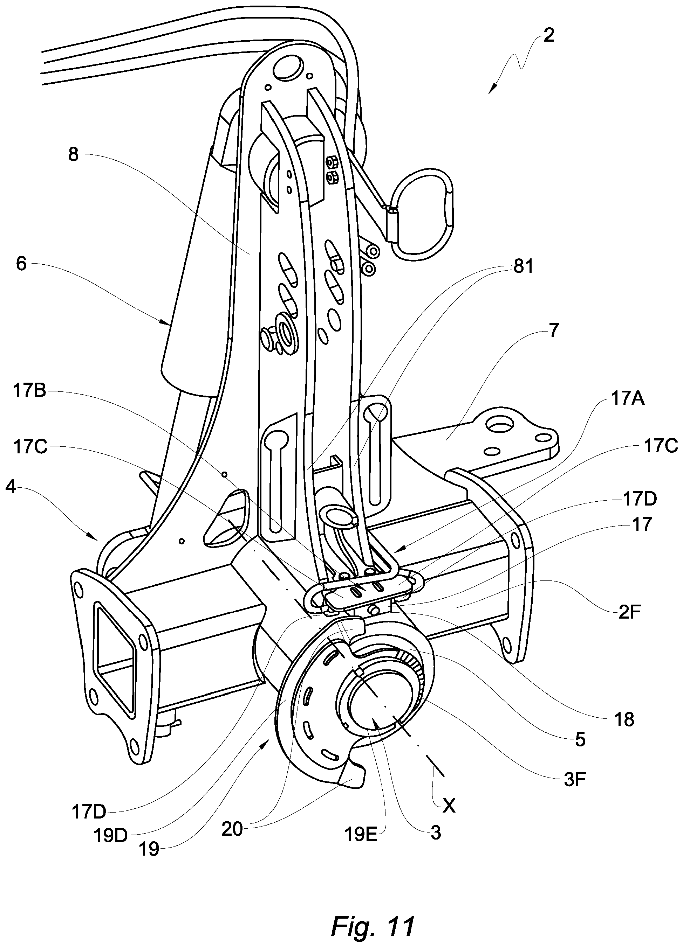

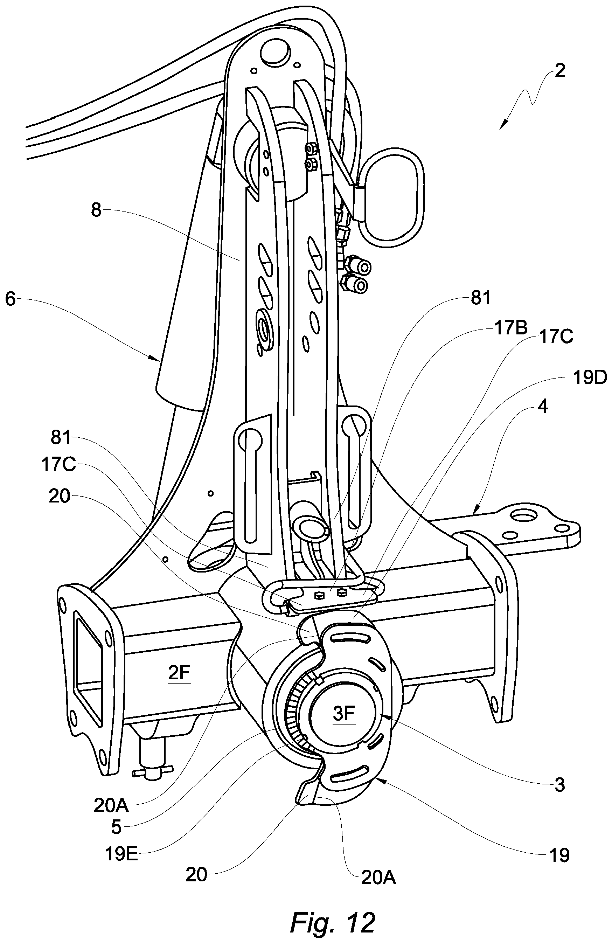

The front portion 2F of the attachment member 2 and the front portion 3F of the main pin 3 are shown in Figures 11 and 12, in accordance with a second embodiment of the invention.

In the embodiment illustrated in Figures 11 and 12, the reversal device 4 (which is partially hidden by the attachment member 2) is mounted on the main pin 3. In turn, the main pin 3 is preferably secured to the attachment member 2 or headstock 8 rotatably about the reversal axis X. Advantageously, the switch 18 and the abutment portion 19 are mounted on the attachment member 2 or headstock 8 and on the main pin 3, respectively. In preferred embodiments, the abutment portion 19 is a plate, preferably made of metal. Preferably, the plate may be a flanged element. In preferred embodiments, there is defined in the abutment portion 19 a hole 19E which is configured to receive the front portion 3F of the main pin 3 and to allow a stable connection thereof which advantageously allows the portion 19 and main pin 3 to be made rotationally secure. Advantageously, the switch 18 and the abutment portion 19 are mounted on the front portion 2F of the attachment member 2 and on the front portion 3F of the main pin 3, respectively. Because the front portion 3F of the main pin 3 is adjacent to the front portion 2F of the attachment member 2, the switch 18 and the abutment portion 19 are capable of mutual contact. Preferably, the valve 17 with the commutation device 17A are also mounted on the front portion 2F of the attachment member 2 together with the switch 18.

In one aspect, the switch 18 is secured to the attachment member 2 at the periphery of the bush 5 or, more generally, of the main pin 3, preferably in a distal position relative to the ground so as to limit the exposure to accidental impacts and mud. Advantageously, the distal position is the zone which, during use, is located in a position diametrically opposite the ground with respect to the rotation axis of the pin. Even more preferably, the switch 18 is interposed between two reinforcement wings 81 of the headstock 8 which are perpendicular to the ground so as to be shielded by the wings 81 themselves against lateral impacts.

There is advantageously provided a protective plate 17B which is mounted on the commutation device 17A. Preferably, the protective plate 17B is mounted in a distal position relative to the ground so as to protect the valve 17 and/or the switch 18 from accidental impacts from above. Even more preferably, the protective plate 17B comprises lateral wings 17C which extend at the sides of the interception valve 17 in order to protect the hydraulic connections 17D of the circuit of pressurized fluid being introduced into and discharged from the valve itself.

According to another advantageous aspect, the abutment portion 19 extends in a substantially radial direction from the front portion 3F of the main pin 3. Advantageously, therefore, the abutment portion 19 is eccentric with respect to the reversal axis X. In this manner, the switch 18 and the abutment portion 19 are capable of mutual contact as a function of the rotation angle R of the main pin 3 with respect to the reversal axis X.

In preferred embodiments, the abutment portion 19 comprises a substantially flat surface 19D which is configured to maintain the switch 18 pressed over the course of the rotation of the reversal device 4 about the reversal axis X, as shown in Figure 12. Advantageously, to this end the substantially flat surface 19D can be developed inside a plane substantially perpendicular to the rotation axis of the pin 3.

Advantageously, the abutment portion 19 comprises at least one portion 20 which is inclined or curvilinear and which is configured to progressively press or disengage the switch 18 when the abutment portion 19 moves towards the switch 18 or moves away from it, respectively, as shown in Figure 11. It may be noted that the portion 20 is advantageously inclined or curvilinear along the path of the switch 18 in contact with the abutment portion 19. Furthermore, it will be appreciated that advantageously the portion 20 is inclined or curvilinear with respect to the surface 19D which is substantially flat. According to another advantageous aspect, the inclined or curvilinear portion 20 is directed in the opposite direction to the frame 13. This arrangement allows the switch 18 to be progressively pressed when it slides on the portion 20, moving towards the surface 19D and vice versa this arrangement allows the switch 18 to be progressively disengaged when it slides on the portion 20, moving away from the surface 19D. Preferably, the portion 20 is connected to the surface 19D in the region of a bending line 20A which extends in a substantially radial direction with respect to the main pin 3. Even more preferably, the inclination angle of the portion 20 with respect to the surface 19D is with reference to the bending line 20A. In one aspect, the portion 20 is constructed by bending along the bending line 20A of a peripheral edge of the abutment portion 19. In some embodiments, the portion 20 is curvilinear so as to be joined to the surface 19D without any break in continuity. This arrangement prevents an abrupt mechanical stress of the switch 18 when it slides between the surface 19D and the portion 20.

In preferred embodiments, the surface 19D of the abutment portion 19 extends along a circumferential arc about the reversal axis X or about the main pin 3. Preferably, at the two extremities of the arc the abutment portion 19 terminates with respective opposite portions 20. The two portions 20 are configured to be able to press and to be able to disengage the switch 18 both when the rotation device 4 rotates in a first rotation direction and when it rotates in a second rotation direction counter to the first rotation direction. In particular, preferably, a first portion 20 is configured to press the switch 18 when the reversal device 4 rotates in the first rotation direction and to disengage the switch 18 when the reversal device 4 rotates in the second rotation direction. Vice versa, a second portion 20 which is opposite the first portion 20 is preferably configured to press the switch 18 when the reversal device 4 rotates in the second rotation direction and to disengage the switch 18 when the reversal device 4 rotates in the first rotation direction.

The invention thereby solves the problem proposed while achieving a number of advantages, including:
- possibility of reducing the complexity and therefore the cost of the device which intercepts the flow of pressurized fluid to the linearization actuator,
- eliminating potentially any connection element which is movable between the reversal device and the frame, eliminating any occurrences of mechanical play which consequently have to be taken up and eliminating possible wear and any malfunctions caused by the damage to the components with the possibility of compromising the structural integrity of the plough.

## Claims

1. A mounted reversible plough (1) including an attachment member (2) with respect to a tractor, a reversal device (4) which is hinged to the attachment member (2) about a reversal axis (X), a reversal actuator (6) between the attachment member (2) and the reversal device (4), a frame (13) which carries ploughing elements (26) which are operative alternately in accordance with the position of the reversal device (4) about the reversal axis (X), the reversal device (4) comprising a linearization actuator (12) which can be actuated by a pressurized fluid, the flow of which can be intercepted by means of an interception valve (17), **characterized in that** it comprises a commutation device (17A) of the interception valve (17) which is configured so as to actuate the valve (17), selectively intercepting or allowing the flow of the pressurized fluid in accordance with a rotation angle (R) of the frame (13) about the reversal axis (X).

2. A plough (1) according to claim 1, wherein the interception valve (17) is actuated in accordance with the rotation angle (R) by an abutment portion (19) of the reversal device (4).

3. A plough (1) according to claim 2, wherein the abutment portion (19) is eccentric with respect to the reversal axis (X).

4. A plough (1) according to any one of the preceding claims, wherein the frame (13) is secured to the reversal device (4) by means of an articulation arm (11) and a linearization actuator (12) of the frame (13).

5. A plough (1) according to claim 4, wherein the articulation arm (11) is hinged to the frame (13) at a first end thereof about a linearization axis (15) of the frame (13) and hinged to the reversal device (4) at a second opposite end thereof about an articulation axis (14).

6. A plough (1) according to any one of the preceding claims, wherein the interception valve (17) is configured so as to intercept the flow of the pressurized fluid so as to keep the linearization of the frame (13) actuated by the linearization actuator (12) constant when the frame (13) is caused to rotate about the reversal axis (X), and/or wherein the valve (17) intercepts the flow of pressurized fluid to the linearization actuator (12) for values of the rotation angle (R) of the frame (13) about the reversal axis (X) between 2° and 30°, preferably for values of the rotation angle (R) between 5° and 15° and even more preferably for a value of the rotation angle of 10°.

7. A plough (1) according to any one of the preceding claims, wherein the interception valve (17) is actuated by a switch (18) and an abutment portion (19) which are capable of mutual contact in accordance with the rotation angle (R).

8. A plough (1) according to claim 7, wherein the switch (18) and abutment portion (19) are mounted on the reversal actuator (6) and on the reversal device (4), respectively, or vice versa.

9. A plough (1) according to claim 8, wherein the abutment portion is formed by a rod (19A), the rod comprising an abutment end opposite the reversal device (4) and comprising at least one portion (20) which is inclined or curvilinear and which is configured to progressively press or disengage the switch (18) when the valve (17) moves towards the rod (19a) or moves away therefrom, respectively.

10. A plough (1) according to claim 9, wherein an end of the reversal actuator (6) and an end of the rod (19A) are secured to the reversal device (4) in a manner able to pivot about the same axis (Y), and/or wherein the rod (19A) provides for a rectilinear portion (19B) which extends parallel with the sliding direction of the reversal actuator (6).

11. A plough (1) according to any one of the preceding claims, wherein the interception valve (17) is fixed to the reversal actuator (6) in a movable manner away from and towards the abutment portion (19).

12. A plough (1) according to claim 7, wherein the reversal device (4) is mounted on a main pin (3) which is secured to the attachment member (2) rotatably about the reversal axis (X), the switch (18) and abutment portion (19) being mounted on the attachment member (2) and on the main pin (3), respectively.

13. A plough (1) according to claim 12, wherein there are defined on the attachment member (2) and on the main pin (3) respective front portions (2F, 3F) which are directed in a direction opposite the frame (13), the switch (18) and abutment portion (19) being mounted on the front portion (2F) of the attachment member (2) and on the front portion (3F) of the main pin (3), respectively.

14. A plough (1) according to claim 13, wherein the abutment portion (19) extends in a substantially radial direction from the front portion (3F) of the main pin (3), the abutment portion (19) comprising at least one portion (20) which is inclined or curvilinear and which is configured to progressively press or disengage the switch (18) when the abutment portion (19) moves towards the switch (18) or moves away therefrom, respectively.

15. A plough (1) according to any one of the preceding claims, wherein the articulation arm (11) and the linearization actuator (12) form opposite sides of an articulated quadrilateral (10), preferably wherein the remaining sides of the quadrilateral (10) are formed by the reversal device (6) between the articulation axis (14) and a rotatable securing axis of a first end of the linearization actuator (12) at the side directed towards the reversal device (6) and by the frame (13) between the linearization axis (15) and a rotatable securing axis of a second opposite end of the linearization actuator (12).

## Patentansprüche

1. Drehbarer Anbaupflug (1) mit einem Anbauelement (2) in Bezug auf einen Traktor, mit einer Umkehrvorrichtung (4), die am Anbauelement (2) um eine Umkehrachse (X) angelenkt ist, mit einem Umkehraktuator (6) zwischen dem Anbauelement (2) und der Umkehrvorrichtung (4), mit einem Rahmen (13), der Pflugelemente (26) trägt, die gemäß der Position der Umkehrvorrichtung (4) um die Umkehrachse (X) abwechselnd wirksam sind, wobei die Umkehrvorrichtung (4) einen Linearisierungsaktuator (12) aufweist, der durch ein unter Druck stehendes Fluid betätigt werden kann, dessen Durchfluss mittels eines Absperrventils (17) unterbrochen werden kann, **dadurch gekennzeichnet, dass** eine Kommutierungsvorrichtung (17A) des Absperrventils (17) umfasst ist, die eingerichtet ist, um das Ventil (17) zu betätigen, das den Durchfluss des unter Druck stehenden Fluids gemäß einem Drehwinkel (R) des Rahmens (13) um die Umkehrachse (X) selektiv unterbricht oder ermöglicht.

2. Pflug (1) nach Anspruch 1, wobei das Absperrventil (17) gemäß dem Drehwinkel (R) durch einen Anlageabschnitt (19) der Umkehrvorrichtung (4) betätigt wird.

3. Pflug (1) nach Anspruch 2, wobei der Anlageabschnitt (19) exzentrisch zur Umkehrachse (X) angeordnet ist.

4. Pflug (1) nach einem der vorhergehenden Ansprüche, wobei der Rahmen (13) mittels eines Gelenkarms (11) und eines Linearisierungsaktuators (12) des Rahmens (13) an der Umkehrvorrichtung (4) befestigt ist.

5. Pflug (1) nach Anspruch 4, wobei der Gelenkarm (11) an einem ersten Ende um eine Linearisierungsachse (15) des Rahmens (13) am Rahmen (13) angelenkt ist und an einem zweiten, gegenüberliegenden Ende um eine Gelenkachse (14) an der Umkehrvorrichtung (4) angelenkt ist.

6. Pflug (1) nach einem der vorhergehenden Ansprüche, wobei das Absperrventil (17) eingerichtet ist, um den Durchfluss des unter Druck stehenden Fluids zu unterbrechen, um die Linearisierung des Rahmens (13), der durch den Linearisierungsaktuator (12) betätigt wird, konstant zu halten, wenn bewirkt wird, dass sich der Rahmen (13) um die Umkehrachse (X) dreht, und/oder wobei das Ventil (17) den Durchfluss des unter Druck stehenden Fluids zum Linearisierungsaktuator (12) für Werte des Drehwinkels (R) des Rahmens (13) um die Umkehrachse (X) zwischen 2° und 30°, vorzugsweise für Werte des Drehwinkels (R) zwischen 5° und 15° und noch bevorzugter für einen Wert des Drehwinkels von 10° unterbricht.

7. Pflug (1) nach einem der vorhergehenden Ansprüche, wobei das Absperrventil (17) durch einen Schalter (18) und einen Anlageabschnitt (19) betätigt wird, die gemäß dem Drehwinkel (R) miteinander in Kontakt kommen können.

8. Pflug (1) nach Anspruch 7, wobei der Schalter (18) und der Anlageabschnitt (19) am Umkehraktuator (6) bzw. an der Umkehrvorrichtung (4) oder umgekehrt montiert sind.

9. Pflug (1) nach Anspruch 8, wobei der Anlageabschnitt durch eine Stange (19A) gebildet wird, wobei die Stange ein der Umkehrvorrichtung (4) gegenüberliegendes Anlageende und zumindest einen Abschnitt (20) aufweist, der geneigt oder gekrümmt ist und der eingerichtet ist, um den Schalter (18) schrittweise zu betätigen oder freizugeben, wenn sich das Ventil (17) in Richtung der Stange (19a) bewegt bzw. sich von ihr entfernt.

10. Pflug (1) nach Anspruch 9, wobei ein Ende des Umkehraktuators (6) und ein Ende der Stange (19A) an der Umkehrvorrichtung (4) derart befestigt sind, um um dieselbe Achse (Y) schwenkbar zu sein, und/oder wobei die Stange (19A) einen geradlinigen Abschnitt (198) vorsieht, der sich parallel zur Gleitrichtung des Umkehraktuators (6) erstreckt.

11. Pflug (1) nach einem der vorhergehenden Ansprüche, wobei das Absperrventil (17) am Umkehraktuator (6) vom Anlageabschnitt (19) weg und zu diesem hin beweglich befestigt ist.

12. Pflug (1) nach Anspruch 7, wobei die Umkehrvorrichtung (4) an einem Hauptbolzen (3) montiert ist, der um die Umkehrachse (X) drehbar am Anbauelement (2) befestigt ist, wobei der Schalter (18) und der Anlageabschnitt (19) am Anbauelement (2) bzw. am Hauptbolzen (3) montiert sind.

13. Pflug (1) nach Anspruch 12, wobei am Anbauelement (2) und am Hauptbolzen (3) entsprechende vordere Abschnitte (2F, 3F) ausgebildet sind, die in eine dem Rahmen (13) entgegengesetzte Richtung ausgerichtet sind, wobei der Schalter (18) und der Anlageabschnitt (19) am vorderen Abschnitt (2F) des Anbauelements (2) bzw. am vorderen Abschnitt (3F) des Hauptbolzens (3) montiert sind.

14. Pflug (1) nach Anspruch 13, wobei sich der Anlageabschnitt (19) in einer im Wesentlichen radialen Richtung vom vorderen Abschnitt (3F) des Hauptbolzens (3) erstreckt, wobei der Anlageabschnitt (19) zumindest einen Abschnitt (20) aufweist, der geneigt oder gekrümmt ist und der eingerichtet ist, um den Schalter (18) schrittweise zu betätigen oder freizugeben, wenn sich der Anlageabschnitt (19) in Richtung des Schalters (18) bewegt bzw. sich von ihm entfernt.

15. Pflug (1) nach einem der vorhergehenden Ansprüche, wobei der Gelenkarm (11) und der Linearisierungsaktuator (12) gegenüberliegende Seiten eines Gelenkvierecks (10) bilden, wobei vorzugsweise die übrigen Seiten des Vierecks (10) durch die Umkehrvorrichtung (6) zwischen der Gelenkachse (14) und einer drehbaren Befestigungsachse eines ersten Endes des Linearisierungsaktuators (12) auf der der Umkehrvorrichtung (6) zugewandten Seite und durch den Rahmen (13) zwischen der Linearisierungsachse (15) und einer drehbaren Befestigungsachse eines zweiten gegenüberliegenden Endes des Linearisierungsaktuators (12) gebildet werden.

## Revendications

1. Charrue réversible montée (1) incluant un organe de raccordement (2) à un tracteur, un dispositif d'inversion (4) qui est articulé avec l'organe de raccordement (2) autour d'un axe d'inversion (X), un actionneur d'inversion (6) entre l'organe de raccordement (2) et le dispositif d'inversion (4), une structure (13) qui porte des éléments de labourage (26) qui sont fonctionnels de manière alternée en fonction de la position du dispositif d'inversion (4) autour de l'axe d'inversion (X), le dispositif d'inversion (4) comprenant un actionneur de linéarisation (12) qui peut être actionné par un fluide pressurisé dont l'écoulement peut être intercepté au moyen d'une vanne d'interception (17), **caractérisée en ce qu'**elle comprend un dispositif de commutation (17A) de la vanne d'interception (17) qui est configuré de manière à actionner la vanne (17), en interceptant ou permettant sélectivement l'écoulement du fluide pressurisé en fonction d'un angle de rotation (R) de la structure (13) autour de l'axe d'inversion (X).

2. Charrue (1) selon la revendication 1, dans laquelle la vanne d'interception (17) est actionnée en fonction de l'angle de rotation (R) par une butée (19) du dispositif d'inversion (4).

3. Charrue (1) selon la revendication 2, dans laquelle la butée (19) est excentrée par rapport à l'axe d'inversion (X).

4. Charrue (1) selon l'une quelconque des revendications précédentes, dans laquelle la structure (13) est sécurisée avec le dispositif d'inversion (4) au moyen d'un bras d'articulation (11) et d'un actionneur de linéarisation (12) de la structure (13).

5. Charrue (1) selon la revendication 4, dans laquelle le bras d'articulation (11) est articulé avec la structure (13) à une première extrémité de celui-ci autour d'un axe de linéarisation (15) de la structure (13) et articulé avec le dispositif d'inversion (4) à une seconde extrémité opposée de celui-ci autour d'un axe d'articulation (14).

6. Charrue (1) selon l'une quelconque des revendications précédentes, dans laquelle la vanne d'interception (17) est configurée de manière à intercepter l'écoulement du fluide pressurisé afin de maintenir constante la linéarisation de la structure (13) actionnée par l'actionneur de linéarisation (12) lorsque la structure (13) est amenée à tourner autour de l'axe d'inversion (X), et/ou dans laquelle la vanne (17) intercepte l'écoulement du fluide pressurisé vers l'actionneur de linéarisation (12) pour des valeurs de l'angle de rotation (R) de la structure (13) autour de l'axe d'inversion (X) entre 2° et 30°, de préférence pour des valeurs de l'angle de rotation (R) entre 5° et 15° et avec plus de préférence pour une valeur de l'angle de rotation de 10°.

7. Charrue (1) selon l'une quelconque des revendications précédentes, dans laquelle la vanne d'interception (17) est actionnée par un commutateur (18) et une butée (19) qui sont capables de venir en contact l'un avec l'autre en fonction de l'angle de rotation (R).

8. Charrue (1) selon la revendication 7, dans laquelle le commutateur (18) et la butée (19) sont montés respectivement sur l'actionneur d'inversion (6) et sur le dispositif d'inversion (4), ou vice-versa.

9. Charrue (1) selon la revendication 8, dans laquelle la butée est formée par une tige (19A), la tige comprenant une extrémité de butée à l'opposé du dispositif d'inversion (4) et comprenant au moins une partie (20) qui est inclinée ou curviligne et qui est configurée pour progressivement presser le commutateur (18) ou se désengager de celui-ci respectivement lorsque la vanne (17) se rapproche de la tige (19a) ou s'éloigne de celle-ci.

10. Charrue (1) selon la revendication 9, dans laquelle une extrémité de l'actionneur d'inversion (6) et une extrémité de la tige (19A) sont sécurisées avec le dispositif d'inversion (4) de manière à pouvoir pivoter autour du même axe (Y), et/ou dans laquelle la tige (19A) fournit une partie rectiligne (19B) qui s'étend parallèlement à la direction de glissement de l'actionneur d'inversion (6).

11. Charrue (1) selon l'une quelconque des revendications précédentes, dans laquelle la vanne d'interception (17) est fixée à l'actionneur d'inversion (6) de manière à pouvoir s'éloigner et se rapprocher de la butée (19).

12. Charrue (1) selon la revendication 7, dans laquelle le dispositif d'inversion (4) est monté sur une broche principale (3) qui est sécurisée avec l'organe de raccordement (2) de manière à pouvoir tourner autour de l'axe d'inversion (X), le commutateur (18) et la butée (19) étant montés respectivement sur l'organe de raccordement (2) et sur la broche principale (3).

13. Charrue (1) selon la revendication 12, dans laquelle, il est défini sur l'organe de raccordement (2) et sur la broche principale (3) des parties avant (2F, 3F) respectives qui sont dirigées dans une direction opposée à la structure (13), le commutateur (18) et la butée (19) étant montés respectivement sur la partie avant (2F) de l'organe de raccordement (2) et sur la partie avant (3F) de la broche principale (3).

14. Charrue (1) selon la revendication 13, dans laquelle la butée (19) s'étend dans une direction sensiblement radiale depuis la partie avant (3F) de la broche principale (3), la butée (19) comprenant au moins une partie (20) qui est inclinée ou curviligne et qui est configurée pour progressivement presser contre le commutateur (18) ou se désengager de celui-ci, respectivement lorsque la butée (19) se rapproche ou s'éloigne du commutateur (18).

15. Charrue (1) selon l'une quelconque des revendications précédentes, dans laquelle le bras d'articulation (11) et l'actionneur de linéarisation (12) forment des côtés opposés d'un quadrilatère (10) articulé, de préférence dans laquelle les côtés restants du quadrilatère (10) sont formés par le dispositif d'inversion (6) entre l'axe d'articulation (14) et un axe de sécurisation rotatif d'une première extrémité de l'actionneur de linéarisation (12) au niveau du côté dirigé vers le dispositif d'inversion (6) et par la structure (13) entre l'axe de linéarisation (15) et un axe de sécurisation rotatif d'une seconde extrémité opposée de l'actionneur de linéarisation (12).
